# EUROPEAN PATENT APPLICATION

(11) **EP 1 535 953 A1**
(43) Date of publication of application: **01.06.2005**
(21) Application number: 03741182.4
(22) Date of filing: 03.07.2003
(51) Int. Cl.: C08J 5/18, B32B 15/08, B32B 27/36, B65D 1/09, C08L 67/00

(54) **SURFACE-ROUGHENED RESIN FILM, METAL SHEET COATED WITH SURFACE-ROUGHENED RESIN FILM, PROCESS FOR PRODUCING METAL SHEET COATED WITH SURFACE-ROUGHENED RESIN FILM, AND METAL CAN HAVING SURFACE COATED WITH SURFACE-ROUGHENED RESIN FILM AND PROCESS FOR PRODUCING THE SAME**

(30) Priority: 30.07.2002 JP 2002221207
(71) Applicant: Toyo Kohan Co., Ltd., Tokyo 102-8447 (JP)
(72) Inventor: KURODA, Hitoshi;, Kudamatsu-shi, Yamaguchi 744-8611 (JP); HU, Lianchun;, Kudamatsu-shi, Yamaguchi 744-8611 (JP); MAIDA, Narimasa;, Kudamatsu-shi, Yamaguchi 744-8611 (JP)
(74) Representative: VOSSIUS & PARTNER
(86) International application number: PCT/JP2003/008490
(87) International publication number: WO 2004/011532

(57) **Abstract**

It is intended to provide a metal can from which the contents packed therein are easy to take out and which has been coated with a polyester resin film for food or with a film for food which is made of a resin consisting mainly of a polyester resin; a metal sheet which has been coated with a surface-roughened resin film and is for use in the metal can; a surface-roughened resin film for use in the metal sheet; and processes for producing these. The surface-roughened resin film is one which comprises a polyester resin and, incorporated therein, either inorganic particles or a resin incompatible with the polyester resin, e.g., a polyolefin resin, to thereby have a roughened surface. Alternatively, the surface-roughened resin film is one obtained by embossing a surface of a resin film. The surface-roughened resin film is laminated to a metal sheet. Alternatively, a resin film which has not undergone surface roughening is laminated to a metal sheet and this resin film-coated metal sheet is embossed. The resultant resin film-coated metal sheet is formed into a can by drawing or by drawing with ironing. The surface roughness is thus enhanced.

## Description

### Technical Field

The present invention relates to a surface-roughened resin film, a metal sheet coated with a surface-roughened resin film, a process for producing the metal sheet coated with a surface-roughened resin film, and a metal can having a surface coated with a surface-roughened resin film and a process for producing the metal can.

### Background Art

In recent years, a metal can for food formed by processing a metal sheet coated with a resin film, particularly a polyester resin has been widely placed on the market. Such a can obtained by using a metal sheet coated with a polyester resin has an extremely smooth surface. However, due to this smoothness, when the contents packed in the can are taken out, they firmly adhere to the surface of the can, therefore, there is a drawback that it is difficult to take out.

In order to overcome the drawback, the present invention makes it an obj ect to provide a metal can from which the contents packed therein are easy to take out and which has been coated with a polyester resin film for food or with a film for food which is made of a resin consisting mainly of a polyester resin; a metal sheet which has been coated with a surface-roughened resin film and is for use in the metal can; a surface-roughened resin film for use in the metal sheet; and processes for producing these.

### Disclosure of the invention

In order to solve the foregoing problem, the present invention makes it an ultimate object to obtain a metal can for food, in which the surface of a polyester resin film coated on a metal sheet, which becomes the inner surface of the can, has been roughened.

In other words, a surface-roughened polyester resin film of the present invention is a surface-roughened resin film characterized in that it comprises a polyester resin film whose surface roughness Ra (JIS B 0601) is 0.2 µm or greater, preferably Ra (JIS B 0601) is 0.5 µm or greater; in addition,
it has been formed by extruding a polyester resin obtained by incorporating therein 1% or more by weight of an inorganic particle with a particle size of 1 µm or greater; and further,
the inorganic particle is one or more kinds of titanium dioxide, zinc oxide, calcium carbonate and silicone dioxide.

In addition, the surface-roughened resin film of the present invention is characterized in that it has been formed by extruding a resin obtained by incorporating in the polyester resin 5 to 30% by weight of a resin incompatible with the polyester resin; and further
the resin incompatible with the polyester resin is one or more kinds of a polyolefin resin and polymethylmethacrylate.

Further, the surface-roughened resin film of the present invention may be a surface-roughened resin film comprising a two-layer film consisting of any of the foregoing surface-roughened resin films as the upper layer film and a lower layer film which has been provided thereunder and is composed of a resin obtained by blending one or more kinds of polyester resins and a polyolefin component composed of at least one kind selected from the group consisting of a polyolefin resin and polyolefin elastomer. In this case,
the surface-roughened resin film of the present invention is a surface-roughened resin film according to claim 6 characterized in that:
a polyolefin resin or a resin composed of a polyolefin resin and polyolefin elastomer is used as the polyolefin component; in addition,
the polyolefin resin is a resin composed of one or more kinds of polymer resins of 1-alkene having 2 to 8 carbon atoms; further,
the 1-alkene polymer resin is any of polyethylene, polypropylene, ethylene-propylene copolymer; further,
the polyolefin resin is a polyolefin resin obtained by polymerization with a metallocene catalyst; further
at least a part of the polyolefin resin is a modified polyolefin resin obtained by modification with any of maleic anhydride, acrylic acid, acrylic ester and diglycidyl methacrylate; in addition,
the polyolefin elastomer is ethylene-propylene copolymer elastomer produced in plant with a melt flow rate (MFR: 230°C) of 0.4 to 30 g/10 minutes; and
the blended resin constituting the lower layer film contains 1 to 30% by weight of the polyolefin component.

A metal sheet coated with a surface-roughened resin film of the present invention is characterized in that it is a metal sheet coated with a surface-roughened resin film formed by laminating any of the foregoing surface-roughened resin films to a metal sheet; or
it is a metal sheet coated with a surface-roughened resin film formed by being coated with a polyester resin film having an uneven pattern formed on the surface by an embossing process; and
the surface roughness Ra (JIS B 0601) of the surface-roughened resin film is 0.2 µm or greater, preferably Ra (JIS B 0601) is 0.5 µm or greater.

A process for producing a metal sheet coated with a surface-roughened polyester resin film of the present invention is a production method characterized by laminating any of the foregoing surface-roughened resin films through an adhesive or directly to a metal sheet without an adhesive; or
by laminating a polyester resin film having an uneven pattern formed on the surface by an embossing process through an adhesive or directly to a metal sheet without an adhesive; or
by laminating a polyester resin film through an adhesive or directly to a metal sheet without an adhesive and then embossing the surface of the polyester resin film.

A metal can of the present invention is a metal can formed by processing a metal sheet coated with a resin film, characterized in that it is a metal can having a surface coated with a surface-roughened resin film in which the surface roughness Ra (JIS B 0601) of the resin film after being formed into a can is 0.5 µm or greater, and that the resin film is a polyester resin film.

Alternatively, the metal can of the present invention is a metal can formed by processing any of the foregoing metal sheets coated with a surface-roughened resin film; or
a metal can formed by processing a metal sheet coated with a resin film by drawing or by drawing with ironing with the use of a punch whose surface has been roughened so as to have the foregoing surface coated with a surface- roughened resin film.

A process for producing a metal can of the present invention is a process for producing a metal can having a surface coated with a surface-roughened resin film characterized by processing a metal sheet coated with a polyester resin film and forming it into a can body by drawing or by drawing with ironing with the use of a punch whose surface has been roughened.

### Best Mode for Carrying Out the Invention

The inventors of the present invention intensively studied in order to overcome the foregoing drawback, and as a result, they found out that by roughening the surface of a resin film that becomes the inner surface of a can formed by extruding a metal sheet coated with a resin film, the contents packed in the can can be easy to take out without firmly adhering to the can wall. Hereunder, the present invention will be explained in detail.

The metal can for food of interest of the present invention is composed of a resin-coated film metal sheet obtained by laminating to a metal sheet a resin film whose surface has been roughened, in particular a single-layer resin film whose surface has been roughened by incorporating an inorganic particle or a resin incompatible with a polyester resin in the polyester resin, or a two-layer film consisting of, the same single-layer resin film as above as the upper layer and a resin film composed of a resin obtained by blending a polyester resin and a polyolefin component as the lower layer, and roughening the surface of the upper layer film.

With regard to the metal can coated with a surface-roughened resin film of the present invention, it is preferred that the resin film which will be the innermost surface of the can has been roughened after being formed into a can by drawing or by drawing with ironing, in particular, has a surface roughness Ra of 0.5 µm or greater. If the surface roughness Ra is less than 0.5 µm, it will be difficult to take out the contents packed in the can.

In order that the surface of the resin film after being formed into a can has been roughened, as mentioned below:
1) a process for processing a metal sheet coated with a resin film and forming it into a can by drawing or by drawing with ironing with the use of a punch whose surface has been roughened;
2) a process for laminating a resin film to a metal sheet, undergoing an embossing process to form an uneven pattern on the surface of the resin film, processing the metal sheet coated with a surface-roughened resin film and forming it into a can;
3) a process for forming a can by processing a metal sheet coated with a surface-roughened resin film, which has been obtained by undergoing an embossing process to form an uneven pattern on the surface of the resin film and laminating the resin film to a metal sheet;
or the like is employed, however, without undergoing an embossing process, a resin film whose surface has been roughened in advance is laminated to a metal sheet to form a metal sheet coated with a surface-roughened resin film, then this metal sheet coated with a surface-roughened resin film may be processed and formed into a can.

With regard to the surface-roughened resin film and the metal sheet coated with a surface-roughened resin film of the present invention, it is preferred that the surface of the resin film has in particular a surface roughness Ra of 0.2 µm or greater in the sate of film or in the state of being laminated to a metal sheet. If the surface roughness Ra is less than 0.2 µm, it will be difficult to obtain the surface roughness Ra of 0.5 µm or greater after being formed into a can.

The resin film whose surface has been roughened in advance without undergoing an embossing process, which is the surface-roughened resin film of the present invention, can be obtained as follows.
1) By extruding a polyester resin obtained by incorporating therein 1% or more by weight of one or more kinds of inorganic particles such as titanium dioxide, zinc oxide, calcium carbonate and silicone dioxide having a particle size of 1 µm or greater, a surface-roughened polyester resin film is formed. With regard to the formed film, the inorganic particles project from the surface, whereby the surface is roughened. In this case, if the content of the inorganic particles with a particle size of 1 µm or greater is less than 1% by weight, the surface roughness Ra of 0.2 µm or greater cannot be obtained after being formed into a film.
2) By extruding a resin obtained by incorporating in a polyester resin 5 to 30% by weight of one or more kinds of resins incompatible with the polyester resin selected from a polyolefin resin such as polyethylene, polypropylene and ethylene-propylene copolymer, and polymethylmethacrylate, a surface-roughened polyester resin film is formed. Since these resins are incompatible with a polyester resin, when a film is formed by extruding both resins after heating and melting, these resins incompatible with the polyester resin are present in a particulate form in a state of being dispersed in the polyester resin, and the incompatible resin particles project from the film surface, whereby the surface is roughened.

In this case, if the content of the polyolefin resin, polymethylmethacrylate or the like to be incorporated in the polyester resin is less than 5% by weight, the surface roughness Ra of 0.2 µm or greater cannot be obtained after being formed into a film. On the other hand, if the content exceeds 30% by weight, the dispersed state will become ununiform, whereby it will be significantly difficult to obtain a desired state of the roughened surface.

The foregoing resin film composed of a resin obtained by incorporating in a polyester resin a resin incompatible with the polyester resin has a somewhat poor adhesiveness to a metal sheet, whereby, it may be detached when being formed into a can by drawing or by drawing with ironing in some cases. Therefore, a layer excellent in adhesiveness to both of the resin film and the metal sheet may be interposed therebetween. In other words, by producing a two-layer film consisting of a resin film composed of a resin obtained by incorporating a resin incompatible with the polyester resin in the polyester resin as the upper layer film, and a lower layer film which has been provided thereunder and is composed of a resin obtained by blending a polyester resin and a polyolefin component selected from the group consisting of a polyolefin resin and polyolefin elastomer, by using the coextrusion method, and by laminating it to a metal sheet so as to bring the lower layer film into contact with the metal sheet, whereby a favorable adhesiveness to the metal sheet can be obtained.

Examples of the incompatible polyolefin resin to be incorporated in the polyester resin in the single layer film or in the upper layer of the two-layer film, and the polyolefin resin to be used as the polyolefin component to be blended with a polyester resin in the lower layer of the two-layer film may include a resin composed of one or more kinds of copolymer resins of 1-alkene having 2 to 8 carbon atoms. Examples of the copolymer resin of 1-alkene having 2 to 8 carbon atoms may include low density polyethylene, medium density polyethylene, high density polyethylene, polypropylene, polybutene-1, polypentene-1, polyhexene-1, polyheptene-1, polyoctene-1, ethylene-propylene copolymer, ethylene-butene-1 copolymer, ethylene-hexene copolymer and the like.

Among these, as the polyolefin component to be blended with the polyester resin in the lower layer of the two-layer film, ethylene-propylene copolymer particularly produced in plant is preferred. Further, in the case of using the polyolefin resin obtained with a metallocene catalyst as the polyolefin resin, an oligomer that affects the flavor of the contents packed in the can is generated in a small amount, therefore it is preferred.

In addition, a modified polyolefin resin obtained by modifying the polyolefin resin to be blended with the polyester resin in the lower layer of the two-layer film (such as polyethylene or polypropylene) with any of maleic anhydride, acrylic acid, acrylic ester, acrylate ionomer and diglycidyl methacrylate can be used. By using the one in which such a modified polyolefin resin has been blended at a ratio of 1 to 100% by weight relative to the unmodified polyolefin resin as the polyolefin component, the polyolefin component is dispersed finely in the polyester resin, and moreover, the adhesiveness to the metal sheet is improved, therefore, it is preferred.

As the polyolefin elastomer to be blended with the polyester resin in the lower layer of the two-layer film, it is preferred to use ethylene-propylene copolymer elastomer with a melt flow rate (MFR: 230°C) of 0.4 to 30 g/10 minutes, particularly 8 to 25 g/10 minutes. In the case where the MFR is lower than the foregoing range, the melt viscosity when heating and melting the resin becomes much higher than that of the polyester resin, and the particle size of the polyolefin resin to be dispersed in the polyester resin becomes large, therefore it will be difficult to obtain a favorable state of roughened surface and the impact resistance will be poor. Accordingly, after coating the metal sheet therewith or forming the coated metal sheet into a can, an impact such as dropping or hitting the cans each other is brought about, the resin film is cracked, the crack reached the upper layer film, and the contents are directly contacted with the metal sheet, whereby the metal sheet is corroded and perforated in some cases. On the other hand, if the MFR exceeds the foregoing range, the impact resistance will be also poor. This ethylene-propylene copolymer elastomer is preferably the one produced in plant.

It is preferred that the blending ratio of the polyolefin component to be blended with the polyester resin in the lower layer of the two-layer film is 1 to 30% by weight relative to the polyester resin. If it is less than 1% by weight, the impact resistance will be poor after coating the metal sheet therewith or forming the coated metal sheet into a can. On the other hand, if the blending ratio exceeds 30% by weight, it will be difficult to obtain a uniform film, and the hardness will be decreased, whereby the surface of the resin will become likely to be scratched.

Examples of the polyester resin to be used in the single-layer film or in the upper layer of the two-layer film include a homopolymer obtained by polycondensation of one kind selected from dicarboxylic acids such as terephthalic acid, isophthalic acid, orthophthalic acid, 2,5-naphthalene dicarboxylic acid, 2,6-naphthalene dicarboxylic acid, 1,4-naphthalene dicarboxylic acid, 1,5-naphthalene dicarboxylic acid, diphenyl carboxylic acid, diphenoxyethane dicarboxylic acid, diphenylsulfone carboxylic acid, anthracene dicarboxylic acid, 1,3-cyclopentane dicarboxylic acid, 1,3-cyclohexane dicarboxylic acid, 1,4-cyclohexane dicarboxylic acid, hexahydroterephthalic acid, hexahydroisophthalic acid, malonic acid, dimethylmalonic acid, succinic acid, 3,3-diethylsuccinic acid, glutaric acid, 2,2-dimethylglutaric acid, adipic acid, 2-methyladipic acid, trimethyladipic acid, pimelic acid, azelaic acid, dimer acid, sebacic acid, suberic acid and dodeca dicarboxylic acid, and diols such as ethylene glycol, propylene glycol, hexamethylene glycol, neopentyl glycol, 1,2-cyclohexane dimethanol, 1,4-cyclohexane dimethanol, decamethylene glycol, 1,3-propanediol, 1,4-butanediol, 1,5-pentanediol, 1,6-hexadiol, 2,2-bis(4'-hydroxyphenyl)-propane and bis(4-hydroxyphenyl)sulfone, a copolymer obtained by polycondensation of one or more kinds of dicarboxylic acids with two or more kinds of diols, a copolymer obtained by polycondensation of two or more kinds of dicarboxylic acids with one or more kinds of diols, and a blended resin obtained by blending two or more kinds of these homopolymers and copolymers, and any polyester resin can be used, however, a copolymer of ethylene terephthalate and ethylene isophthalate or polybutylene terephthalate is preferably used. In particular, a polyester resin composed of 85 to 95 mol % of ethylene terephthalate and 5 to 15 mol % of ethylene isophthalate is excellent in processability. As described above, even if after the polyester resin in which an inorganic particle or a resin incompatible with the polyester resin has been incorporated is laminated to a metal sheet, it is processed and formed into a can by drawing or by drawing with ironing, a crack is not generated in the resin film, and it is excellent in adhesiveness to metal sheet. Further, even if it is contacted with the contents packed in the can, it does not impair the flavor or the taste of the contents, and it shows a favorable flavor property.

In addition, polybutylene terephthalate is easy to blend with a polyolefin resin or another polyolefin component, polyolefin elastomer. For example, in the case where it is blended with a polyolefin resin, the polyolefin resin will be dispersed finely in the blended resin, whereby it is effective in forming an appropriate roughened surface and improving the impact resistance and processability. Further, polybutylene terephthalate has a high crystallization rate, therefore, it has a property of inhibiting the growth of a fragile and coarse crystal when a metal sheet coated with a resin is processed and formed into a can, and then the can is heated for painting the outer surface. Therefore, it is extremely effective in improving the impact resistance. In addition, a resin obtained by incorporating a polyolefin resin or polymethylmethacrylate in polybutylene terephthalate or in a blended resin of polybutylene terephthalate and another polyester resin is excellent in resistance to water deterioration (hydrolyzability). Even if a can formed by processing a metal sheet coated with a film composed of this resin is packed with a water-based content and left for a long time, reduction of the molecular weight of the resin is small, therefore, a favorable impact resistance can be stably maintained for a long time.

In the present invention, the foregoing polyester resin to be used in the single-layer resin film or in the upper layer resin film of the two-layer film obtained by incorporating therein an inorganic particle or a polyolefin resin incompatible with the polyester resin, and the foregoing polyester resin to be blended with a polyolefin component, which is used in the lower layer resin film of the two-layer film makes it possible to carry out a severe process such as drawing or drawing with ironing without generating a crack, split, scratch, detachment or the like of the resin film. Therefore, it is premised that the polyester resin is used in an unoriented state which is excellent in molding processability, thus it is necessary to enhance the intrinsic viscosity to reinforce the resin. Accordingly, the intrinsic viscosity of the foregoing polyester resin is preferably in the range of 0.5 to 1.5, more preferably in the range of 0.8 to 1.2. In the case where a polyester resin with an intrinsic viscosity of less than 0.5 is used, the resin strength is extremely decreased, whereby it becomes difficult to form a can by processing the metal sheet coated with a surface-roughened resin film by drawing or by drawing with ironing. In addition, the flavor property becomes poor. On the other hand, in the case where the intrinsic viscosity exceeds 1.5, the melt viscosity when heating and melting the resin becomes extremely high, whereby it becomes extremely difficult to perform the operation of laminating the melted resin to the metal sheet by extrusion.

In the case where the foregoing surface-roughened resin film is a single-layer film, it is preferred that it has a thickness of 5 to 50 µm. In the case where it is a two-layer film, it is preferred that the upper layer has a thickness of 3 to 15 µm, and the lower layer has a thickness of 2 to 47 µm, and further, it has a thickness of 5 to 50 µm in total.

Next, the metal sheet coated with a surface-roughened resin film of the present invention will be explained. The metal sheet coated with a surface-roughened resin film of the present invention can be produced as follows. In other words, a metal sheet is heated to a temperature which is higher than the melting temperature of the foregoing single-layer surface-roughened resin film by 20 to 40°C, the surface which has not been roughened of the surface-roughened resin film is brought into contact with the heated metal sheet, and they are held by using a pair of laminate rolls and bonded under pressure. Alternatively, a metal sheet is heated to a temperature which is higher than the melting temperature of the foregoing lower layer film of the two-layer surface-roughened resin film by 20 to 40°C, the surface of the lower layer film of the two-layer surface-roughened resin film is brought into contact with the heated metal sheet, and they are held by using a pair of laminate rolls and bonded under pressure for lamination. In the case where a stronger adhesiveness between the metal sheet and the surface-roughened resin film is required, they may be laminated by interposing an adhesive between the metal sheet and the surface-roughened resin film. In other words, an adhesive such as an urethane-based adhesive or an epoxy-based adhesive is applied on the surface to be bonded of either the metal sheet or the surface-roughened resin film in advance, then they are bonded under pressure as described above for lamination.

The metal sheet coated with a surface-roughened resin film of the present invention can be also produced as follows. In other words, it is produced by either the method of laminating a resin film to a metal sheet, then performing an embossing process to form a metal sheet coated with a surface-roughened resin film having an uneven pattern formed on the surface of the resin film (the post-processing method), or the method of laminating a resin film having an uneven pattern formed on the surface by an embossing process to a metal sheet to form a metal sheet coated with a surface-roughened resin film (the pre-processing method).

First, the case where the metal sheet is produced by using the post-processing method will be explained. First, any of the foregoing polyester resins is heated and melted, and a resin film with a thickness of 5 to 50 µm is formed by the extrusion method. Then, this resin film is laminated to a metal sheet.
As the method for lamination, any method such as a known heat bonding method, a method of using an adhesive such as an urethane-based adhesive or an epoxy-based adhesive, or a method of heat bonding by interposing an adhesive between a metal sheet and a resin film may be employed. Alternatively, a heated and melted polyester resin may be directly extruded on a metal sheet for lamination. In this case, by extruding a polyester resin on a metal sheet on which an adhesive has been applied in advance, they can be laminated by interposing an adhesive between a metal sheet and a resin film.

The thus obtained metal sheet coated with a resin film is heated so that the temperature of the surface of the resin film reaches the glass-transition temperature of the resin film or higher. Then, by using the other roll of a pair of rolls consisting of an emboss roll whose surface has been roughened so as to have a surface roughness Ra of 0.2 µm or greater as one roll, and a roll having an elastic body on the surface as the other roll, the emboss roll is brought into contact with the resin film, the heated metal sheet coated with the resin film as described above is held and pressure is applied, whereby the pattern of the roughened surface of the emboss roll is transferred to the surface of the resin film, so that the surface roughness Ra of the resin film is made 0.2 µm or greater.

Next, the case where the metal sheet is produced by using the pre-processing method will be explained. First, in accordance with the foregoing steps of the post- processing method, any of the foregoing polyester resins is heated and melted and a resin film is formed. Then, this resin film is heated so that the temperature reaches the glass-transition temperature of the resin film or higher. Then, by using the other roll of a pair of rolls consisting of an emboss roll whose surface has been roughened so as to have a surface roughness Ra of 0.2 µm or greater as one roll, and a roll having an elastic body on the surface as the other roll, a metal sheet coated with the resin film heated as described above is held and pressure is applied, whereby the pattern of the roughened surface of the emboss roll is transferred to the surface of the resin film, so that the surface roughness Ra of the resin film is made 0.2 µm or greater.

Then, a metal sheet is heated to a temperature of the melting point of the embossed resin film ± 10°C, the resin film is brought into contact with the heated metal sheet, and the embossed resin film and the metal sheet are held and pressure is applied for bonding by using a pair of laminate rolls. In the case where an excellent adhesiveness between the metal sheet and the resin film is required, it is preferred that an adhesive is interposed between the metal sheet and the resin film and heat bonding is performed as described above.

As described above, the metal sheet coated with a surface-roughened resin film of the present invention can be obtained.

As the metal sheet, a variety of surface-treated steel sheets such as electrolytic chromate-treated steel sheet (tin free steel, hereinafter referred to as TFS) and tin coated steel sheet (tin plate, hereinafter referred to as tin plate), which are widely used as a common material for can, and aluminum alloy sheet can be used. As the surface-treated steel sheet, preferred is TFS obtained by forming a two-layer film consisting of a lower layer composed of metal chromium in a coating amount of 10 to 200 mg/m² and an upper layer composed of hydrated chromium oxide in a coating amount of 1 to 30 mg/m² in terms of chromium, which has a sufficient adhesiveness to the surface-roughened resin film of the present invention and further has a corrosion resistance. As the tin plate, preferred is the one obtained by coating the surface of steel sheet with tin in a coating amount of 0.1 to 11.2 g/m², and forming thereon a two-layer film composed of metal chromium and hydrated chromium oxide in a coating amount of 1 to 30 mg/m² in terms of chromium, or the one obtained by forming a single-layer film composed of only hydrated chromium oxide. In either case, the steel sheet to be used as the substrate is preferably a low carbon cold-rolled steel sheet which is commonly used as material for can. The thickness of the steel sheet is preferably 0.1 to 0.32 mm. With regard to the aluminum alloy, preferred is a JIS 3000 series alloy or a JIS 5000 series alloy. Further, preferred is the one obtained by undergoing an electrolytic chromate treatment on the surface thereby forming a two-layer film consisting of a lower layer composed of metal chromium in a coating amount of 0 to 200 mg/m² and an upper layer composed of hydrated chromium oxide in a coating amount of 1 to 30 mg/m² in terms of chromium, or the one obtained by undergoing a chromic phosphate treatment, whereby a chromium component of 1 to 30 mg/m² in terms of chromium and a phosphorous component of 0 to 30 mg/m² in terms of phosphate are adhering. The thickness of the aluminum alloy sheet is preferably 0.15 to 0.4 mm.

Next, the metal can having a surface coated with a surface-roughened resin film of the present invention will be explained. The metal can having a surface coated with a surface-roughened resin film of the present invention can be obtained by processing any of the foregoing metal sheets coated with a surface-roughened resin film and forming it into a can. Examples of the can include a three-piece welded can obtained by forming a cut sheet into a cylindrical form by bending or rolling up, forming a can barrel by welding the overlapped edges, and forming a can body by seaming a top plate and a bottom plate to both upper and lower parts of the can barrel, a two-piece can such as a so-called drawn can obtained by punching out a blank in a form of circular plate or the like, forming it into a can barrel by a drawing process, and forming a can body by seaming a top plate to the upper part of the can barrel, a so-called thin-walled drawn can obtained by thinning the wall of a can barrel by undergoing a bending and unbending process during the drawing process to form a can barrel and forming a can body by seaming a top plate to the upper part of the can barrel, or a so-called drawn and ironed can obtained by forming a blank into a cup shape by a drawing process, forming a can barrel by thinning the wall part of the cup by an ironing process, and forming a can body by seaming a top plate to the upper part of the can barrel.

With regard to the inner surface of the three-piece can or two-piece can formed by processing the metal sheet coated with a surface-roughened resin film of the present invention, the surface roughness Ra of the resin film of the inner surface of the can is preferably 0.5 µm or greater so that the contents packed in the can are easy to take out. In the case of forming it into a three-piece can, the surface of the resin film of the metal sheet coated with a surface-roughened resin film is hardly subjected to a processing, therefore the surface roughness of the resin film is hardly changed practically. Accordingly, in the case of applying the metal sheet coated with a surface-roughened resin film of the present invention to a three-piece can, it is preferred to use a metal sheet coated with a surface-roughened resin film whose surface roughness Ra of the resin film is 0.5 µm or greater.

In the case of forming it into a two-piece can by undergoing any of a drawing process, a thinning and drawing process and a drawing and ironing process, with regard to the surface of the resin film of the metal sheet coated with a surface-roughened resin film, the surface roughness of the resin film is increased by any of these processes. Due to this, in the case of processing a metal sheet coated with a surface-roughened resin film whose surface roughness Ra of the resin film is 0.2 µm or greater and forming it into a two-piece can by undergoing any of these processes, a can whose surface roughness Ra of the resin film is 0.5 µm or greater can be obtained after the processing.

A can whose surface roughness Ra of the resin film of the inner surface of the can is 0.5 µm or greater can be obtained as follows. In other words, a metal sheet coated with a resin film is formed by using either the method of heating and melting the foregoing polyester resin and directly extruding it on the foregoing metal sheet, or the method of forming a film from the foregoing polyester resin and laminating the resin film to the metal sheet. When processing a blank obtained by punching it out from this metal sheet coated with a resin film in a shape of circular plate or the like and forming it into a two-piece can by undergoing any of the foregoing drawing process, thinning and drawing process and drawing and ironing process, they are processed by using a punch whose surface has been roughened so as to have a surface roughness Ra of 0.5 µm or greater in the final step, and the pattern of the roughened surface of the punch is transferred to the surface of the resin film, whereby the surface roughness Ra of the surface of the resin film can be made 0.5 µm or greater.

### Examples

Hereunder, the present invention will be explained in more detail with reference to the Examples.

### [Example 1] (Sample numbers 1 to 16)

A single-layer surface-roughened resin film with a thickness shown in Table 3 was produced by using the extrusion method, which was obtained by incorporating, in a polyester resin (represented by PES in the table, hereinafter the same as above) consisting of the resin composition shown in Table 1, an inorganic particle whose type and particle size are shown in Table 2 or a resin incompatible with the polyester resin, which was any of, as shown in Table 3, polyethylene (represented by PE in Table 3, hereinafter the same as above), polypropylene (represented by PP in Table 3, hereinafter the same as above), ethylene-propylene copolymer (represented by EP in Table 3, hereinafter the same as above), and polymethylmethacrylate (represented by PMC in Table 3, hereinafter the same as above) at a content (% by weight) shown in Table 3. The surface roughness Ra (JIS B 0601) of these single-layer films was measured by using a surface roughness meter (Surfcom 1500A, manufactured by Tokyo Seimitsu Co., LTD). The results are shown in Table 3.

As the polyethylene, polypropylene or ethylene-propylene copolymer, the material synthesized with a metallocene catalyst was used in all cases.

**Table 1**

| Resin composition | |
|---|---|
| Resin number | Resin composition |
| PES1 | polyethylene terephthalate (IV value: 0.75) |
| PES2 | polyethylene terephthalate (IV value: 0.82) |
| PES3 | polyethylene terephthalate (IV value: 1.1) |
| PES4 | ethylene terephthalate-ethylene isophthalate copolymer (ethylene isophthalate: 5 mol %)(IV value: 0.9) |
| PES5 | ethylene terephthalate-ethylene isophthalate copolymer (ethylene isophthalate: 10 mol %)(IV value: 0.9) |
| PES6 | ethylene terephthalate-ethylene isophthalate copolymer (ethylene isophthalate: 15 mol %)(IV value: 1.5) |
| PES7 | ethylene terephthalate-ethylene adipate copolymer (ethylene adipate: 10 mol %)(IV value: 0.6) |
| PES8 | ethylene terephthalate-ethylene naphthalate copolymer (ethylene naphthalate: 10 mol %)(IV value: 0.9) |
| PES9 | polybutylene terephthalate (IV value: 1.2) |

**Table 2**

| Type and particle size of inorganic particle | | |
|---|---|---|
| Inorganic material number | Inorganic particle | |
| | Type | Particle size (µm) |
| T1 | TiO₂ | 1.5 |
| Z1 | ZnO | 2.5 |
| C1 | CaCO₃ | 1.0 |
| S1 | SiO₂ | 0.5 |
| S2 | SiO₂ | 1.5 |
| S3 | SiO₂ | 3.5 |

### [Example 2] (Sample numbers 17 to 31)

A two-layer surface-roughened resin film with a thickness shown in Table 5 was produced by the coextrusion method, which consisted of, as the upper layer film, any one of the resin films of the sample numbers 11, 13, 14 and 15 shown in Table 3, composed of a resin obtained by incorporating ethylene-propylene copolymer, which was a resin incompatible with a polyester resin in ethylene terephthalate-ethylene isophthalate copolymer, which was the polyester resin, and a lower layer film which had been provided thereunder and was composed of a resin obtained by blending the polyester resin shown in Table 3 and a polyolefin component selected from the group consisting of a polyolefin resin shown in Table 4 (represented by POL in Table 4, hereinafter the same as above) and polyolefin elastomer (represented by PEL in Table 4, hereinafter the same as above) at a content (% by weight) shown in Table 5. The surface roughness of these two-layer surface-roughened resin films was measured in the same manner as in Example 1. The results are shown in Table 5.

As the olefin resin, the material synthesized with a metallocene catalyst was used in all cases. In addition, as the polyolefin elastomer, the material produced in plant was used.

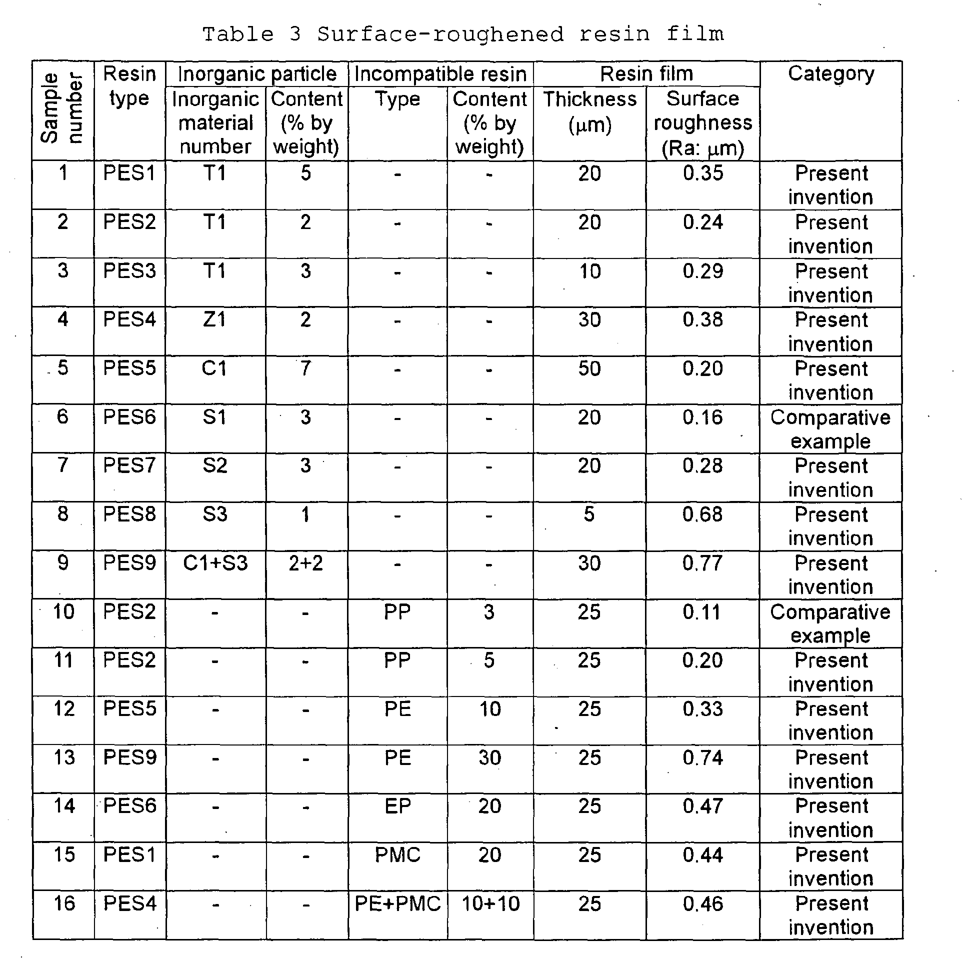

### [Example 3] (Sample numbers 32 to 43)

The single-layer surface-roughened resin films indicated by the sample numbers 2, 6, 8, 11, 14 and 15 shown in Table 3 and the two-layer surface-roughened resin films indicated by the sample numbers 18, 20, 22, 24, 26 and 31 shown in Table 5 were laminated to any of the following three surface-treated steel sheets shown in Table 6, whereby metal sheets coated with a surface-roughened resin film were produced. In other words, these metal sheets were heated and the surface opposite to the roughened surface of these surface-roughened resin films was brought into contact with one side of the metal sheet, and the other side was brought into contact with a white polyester resin film (ethylene terephthalate (88 mol %)-ethylene isophthalate (12 mol %) copolymer, (represented by white ET (88)-EI(12) in Table 6) with a thickness of 20 µm containing titanium oxide pigment, and they were laminated by applying pressure to the three materials by holding them with a pair of press-bonding rolls. For some of the surface-roughened resin films, the ones whose surface opposite to the roughened surface, which was to be contacted with a metal sheet, was applied with an epoxy-based adhesive were used, and they were laminated so that the adhesive was interposed between the surface-roughened resin film and the metal sheet. The surface roughness of these surface-roughened resin films laminated to the sheets coated with a surface-roughened resin film was measured in the same manner as in Example 1. The results are shown in Table 6.

**Table 4**

| Resin composition | |
|---|---|
| Resin number | Resin composition |
| POL1 | Polyethylene |
| POL2 | Polypropylene |
| POL3 | Ethylene-propylene copolymer |
| POL4 | Polypropylene (90% by weight) + maleic anhydride- modified polypropylene (10% by weight) |
| POL5 | Polyethylene (90% by weight) + acrylic acid- modified polyethylene (10% by weight) |
| POL6 | Polyethylene (90% by weight) + methyl acrylate -modified polyethylene (10% by weight) |
| POL7 | Polyethylene (90% by weight) + glycidyl methacrylate-modified polyethylene (10% by weight) |
| PEL1 | Ethylene-propylene copolymer elastomer (MFR: 0.45 g/10 minutes) |
| PEL2 | Ethylene-propylene copolymer elastomer (MFR: 8 g/10 minutes) |
| PEL3 | Ethylene-propylene copolymer elastomer (MFR: 25 g/10 minutes) |
| PEL4 | Ethylene - propylene copolymer elastomer (MFR: 30 g/10 minutes) |

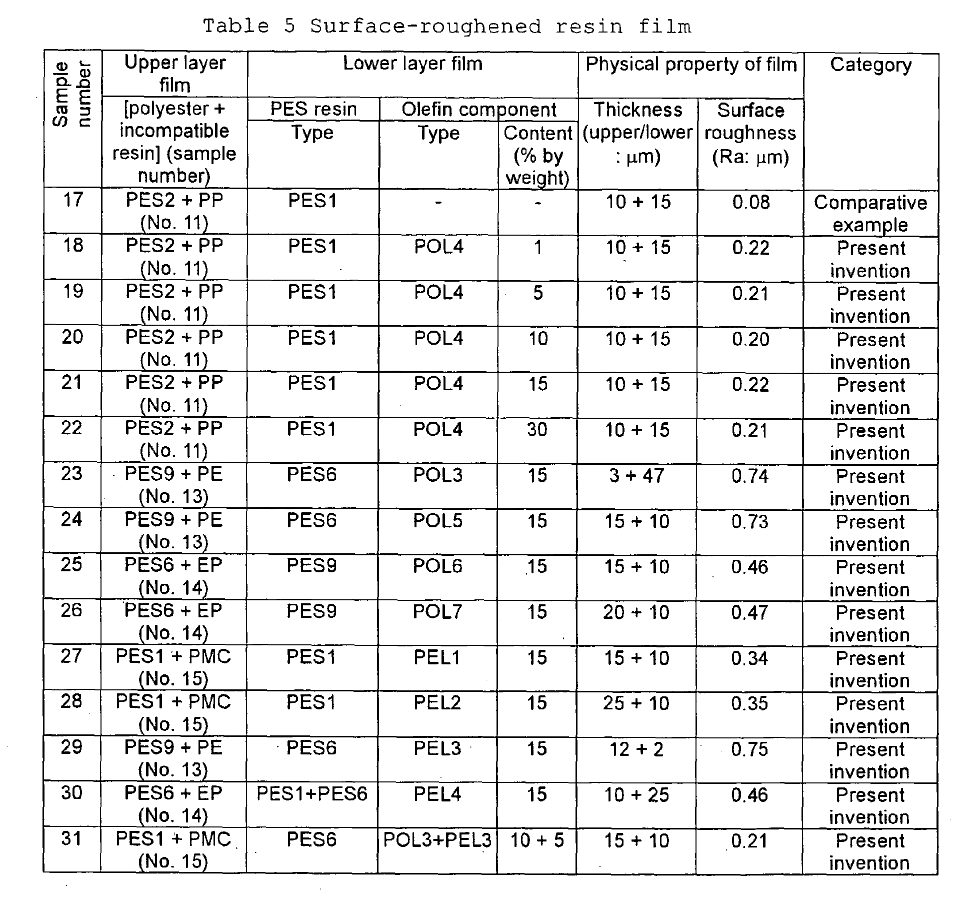

### [Surface-treated steel sheet]

1) Electrolytic chromate-treated steel sheet (represented by TFS in Table 6 and in the following)
   Sheet thickness: 0.18 mm
   Amount of metal chromium: 160 mg/m²
   Amount of hydrated chromium oxide: (in terms of chromium) 19 mg/m²
   Heating temperature: 240 to 280°C
2) Tin plate (represented by ET in Table 6 and in the following) Sheet thickness: 0.18 mm
   Amount of tin coating: 200 mg/m²
   Amount of hydrated chromium oxide: (in terms of chromium) 9 mg/m²
   Heating temperature: 200°C
3) Aluminum alloy (JIS 5052 H39) (represented by AL in Table 6 and in the following)
   Sheet thickness: 0.26 mm
   Coating amount: (in terms of phosphorus) 11 mg/m²
   (in terms of chromium) 7 mg/m²
   Heating temperature: 240 to 280°C

### [Example 4] (Sample numbers 44 to 46)

A two-layer polyester resin film consisting of an upper layer of polyethylene terephthalate (with a thickness of 20 µm, represented by PET in Table 6) and a lower layer of polyester resin (ethylene terephthalate (88 mol %)-ethylene isophthalate (12 mol %) copolymer, with a thickness of 5 µm, represented by ET (88)-EI(12) in Table 6) and the white polyester resin film shown in Example 3 were laminated to the same respective sides of TFS as shown in Example 3 by using the press-bonding rolls in the same manner as Example 3. Then, the laminated steel sheet was heated to 230 to 240°C, and by using a pair of emboss rolls consisting of an emboss roll whose surface had been roughened so as to have a surface roughness Ra (JIS B 0601) of 0.7 µm as one roll and an elastic roll lined with silicone rubber as the other roll, the pattern of the roughened surface of the emboss roll was transferred to the surface of the resin film by holding and pressing the laminated steel sheet by applying a pressure load of 20000 to 120000 N, whereby a metal sheet coated with a surface-roughened resin film was produced. The surface roughness of these surface-roughened resin films laminated to the sheets coated with a surface-roughened resin film was measured in the same manner as in Example 1. The results are shown in Table 6.

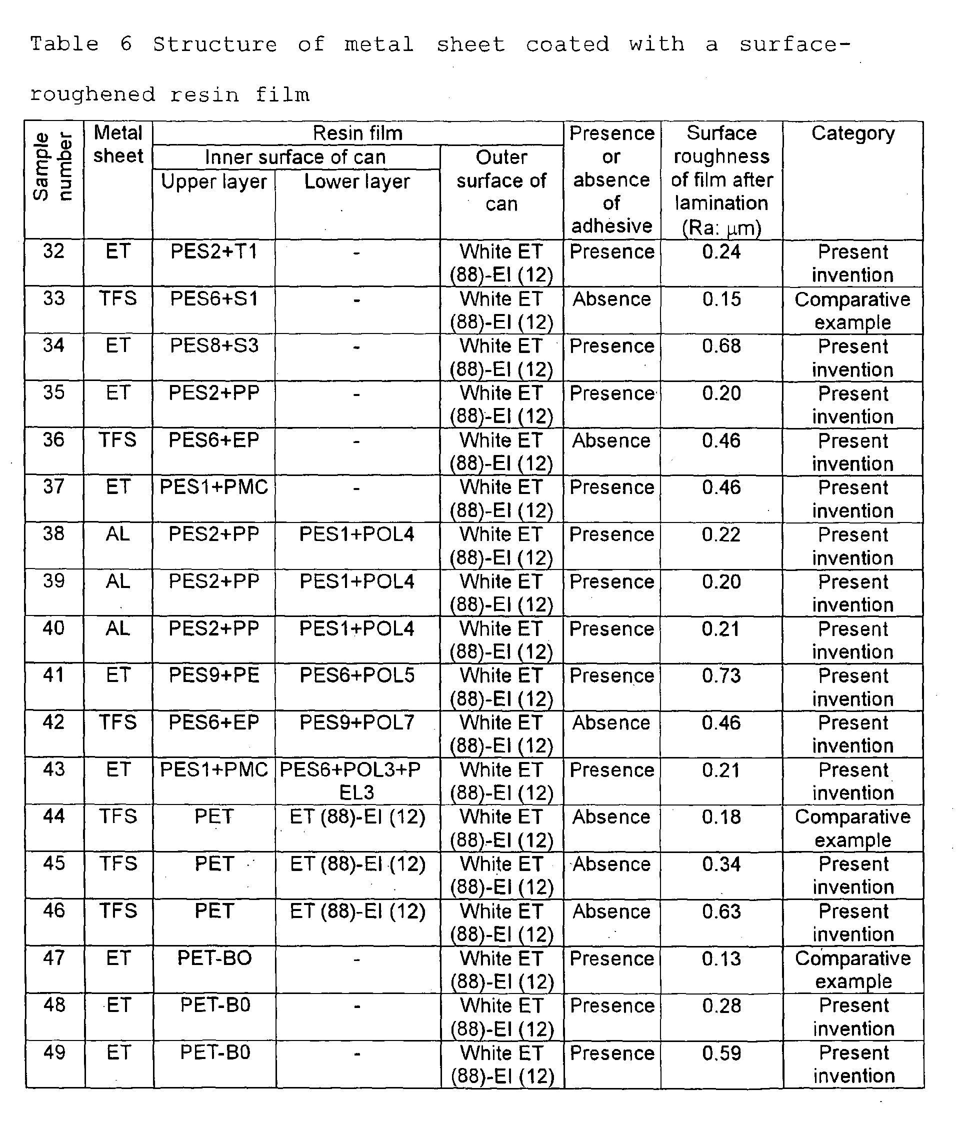

### [Example 5] (Sample numbers 47 to 49)

Abiaxially stretched film of polyethylene terephthalate (with a thickness of 25 µm, with an intrinsic viscosity of 0.8, represented by PET-BO in Table 6) was heated to 160°C, and by using a pair of emboss rolls consisting of an emboss roll whose surface had been roughened so as to have a surface roughness Ra of 0.7 µm as one roll and an elastic roll lined with silicone rubber as the other roll, the pattern of the roughened surface of the emboss roll was transferred to the surface of the resin film by holding and pressing it by applying a pressure load of 20000 to 120000 N, whereby a surface- roughened resin film was produced. An epoxy-based resin was applied to the unroughened surface of this surface-roughened resin film and one side of the white polyester resin film as shown in Example 3, and the solvent was removed by drying. These resin films were placed so that the surfaces, to which the adhesive was applied, was brought into contact with the ET surface, and they were laminated to the same respective surfaces of ET as shown in Example 3 by using the press-bonding rolls in the same manner as in Example 3, whereby a metal sheet coated with a surface-roughened resin film was produced. The surface roughness Ra of these surface-roughened resin films laminated to the sheets coated with a surface-roughened resin film was measured in the same manner as in Example 1. The results are shown in Table 6.

### [Example 6] (Welded can)

A rectangular blank was cut out from the metal sheets coated with a surface-roughened resin film of the sample numbers 34, 35, 47 and 49 and rolled up so that the surface coated with the white resin film became the outer surface of the can, and the edges were superimposed and seam-welded, whereby a welded can barrel was produced. The resin film on the edges to become a welded part had been removed by cutting in advance. Then, after it was corrected by sticking a correction tape made of a polyester resin film on the welded part, a bottom plate was seamed, whereby a welded can was produced. Tuna in oil packed in a commercially available can for business use was ground with a mixer and packed in this welded can and the top plate was seamed. Then, heat sterilization was carried out in steam at 130°C for 90 minutes. Then, after the top plate was opened and the contents were taken out by placing the can upside down, the degree of the remaining contents adhering to the inside wall of the can was visually observed and the easiness of taking out the contents was evaluated in accordance with the following criteria.

### <Evaluation of easiness of taking out contents>

ⓞ : Contents adhering to the inside wall of the can are hardly observed.
○ : Contents adhering to the inside wall of the can are slightly observed, however they can be almost removed by shaking the can by hand.
Δ : Contents adhering to the inside wall of the can are observed, and a large portion of them remains after shaking the can by hand.
× : Contents adhering to the inside wall of the can are observed, and they are hardly removed by shaking the can by hand. The results of the evaluation are shown in Table 7.

### [Example 7] (Drawn can)

A circular plate blank was punched out from the metal sheets coated with a surface-roughened resin film of the sample numbers 37, 39, 42, 44 and 46 and formed into a drawn can at a drawing ratio of 1.88 so that the surface coated with the white resin film became the outer surface of the can. In addition, a metal sheet coated with a resin film (sample number 50), which had the same structure as the sample number 42 except for using a polyester resin (PES6) which did not contain ethylene-propylene copolymer in the upper layer film of the two-layer resin film coating the surface opposite to the surface coated with the white resin film, was produced. A circular plate blank was cut out from this metal sheet coated with a resin film in the same manner as above and a drawn can was formed in the same manner as above, except for using a punch, whose surface had been rough-finished by a grinding process so as to have a surface roughness Ra of 0.78 µm. Then, the surface roughness of the resin film on the inside wall of the drawn can was measured in the same manner as in Example 1. The results of the measurement are shown in Table 7. It is found that the surface roughness of the resin film increases by undergoing a drawing process. Then, the same contents as in Example 6 were packed in the drawn can and the top plate was seamed. Then, after heat sterilization was carried out in the same manner as in Example 6, the top plate was opened, and the easiness of taking out the contents was evaluated in the same manner as in Example 6. The results of the evaluation are shown in Table 7.

### [Example 8] (Drawn and ironed can)

A circular plate blank was punched out from the metal sheets coated with a surface-roughened resin film of the sample numbers 33, 36, 43, 45 and 48 and formed into a cup by a two-step drawing process (the total drawing ratio of 2.21) so that the surface coated with the white resin film became the outer surface of the can. Then this cup was formed into a drawn and ironed can (represented by DI can in Table 7) by a two-step ironing process (the total ironing ratio of 50%) . In addition, a metal sheet coated with a resin film (sample number 51), which had the same structure as the sample number 36 except for using a polyester resin (PES6) which did not contain ethylene-propylene copolymer in the resin film coating the surface opposite to the surface coated with the white resin film, was produced. A circular plate blank was punched out from this metal sheet coated with a resin film in the same manner as above, and after a drawn cup was formed in the same manner as above, a drawn and ironed can was formed in the same manner as above except for using a punch, whose surface had been rough-finished by a grinding process in the ironing step so as to have the surface roughness Ra of 0.55 µm. Then, the surface roughness of the resin film on the inside wall of the drawn and ironed can was measured in the same manner as in Example 1. The results of the measurement are shown in Table 7. It is found that the surface roughness of the resin film increases by undergoing a drawing and ironing process. Then, the same contents as in example 6 were packed in the drawn and ironed can and the top plate was seamed. Then, after heat sterilization was carried out in the same manner as in Example 6, the top plate was opened, and the easiness of taking out the contents was evaluated in the same manner as in Example 6. The results of the evaluation are shown in Table 7.

**Table 7**

| Evaluation results | | | | | |
|---|---|---|---|---|---|
| Type of can | Metal sheet coated with resin film | Surface roughness of resin film (Ra: µm) | | Easiness of taking out contents | Category |
| | | Before processing | After processing | | |
| Welded can | No. 34 | 0.68 | - | ⓞ | Present invention |
| | No. 35 | 0.20 | - | ○ | Comparative example |
| | No. 47 | 0.13 | - | x | Comparative example |
| | No. 49 | 0.59 | - | ○ | Present invention |
| Drawn can | No. 37 | 0.46 | 0.74 | ⓞ | Present invention |
| | No. 39 | 0.20 | 0.50 | ⓞ | Present invention |
| | No. 42 | 0.46 | 0.77 | ⓞ | Present invention |
| | No. 44 | 0.18 | 0.41 | Δ | Comparative example |
| | No. 46 | 0.63 | 0.95 | ⓞ | Present invention |
| | No. 50 | - | 0.57 | ⓞ | Present invention |
| DI can | No. 33 | 0.15 | 0.39 | Δ | Comparative example |
| | No. 36 | 0.46 | 0.72 | ○ | Present invention |
| | No. 43 | 0.21 | 0.53 | ○ | Present invention |
| | No. 45 | 0.34 | 0.67 | ○ | Present invention |
| | No. 48 | 0.28 | 0.61 | ○ | Present invention |
| | No. 51 | - | 0.59 | ○ | Present invention |
| Note) -: Measurement was not performed. | | | | | |

As shown in Table 7, in the case where the metal sheet coated with a surface-roughened resin film of the present invention is formed into a welded can, the contents packed in the welded can can be easy to take out. In addition, in the case where the metal sheet coated with a surface-roughened resin film of the present invention is formed into a drawn can or a drawn and ironed can, the contents packed in such a can can be also easy to take out. Further, in the case where the metal sheet coated with a resin film is formed into a drawn can or a drawn and ironed can by using a punch whose surface has been roughened, the contents packed in such a can can be also easy to take out.

### Industrial Applicability

The surface-roughened resin film of the present invention is a surface-roughened resin film whose surface has been roughened by incorporating an inorganic particle in a polyester resin or by incorporating a resin incompatible with a polyester resin such as a polyolefin resin in a resin.

In addition, the metal sheet coated with a surface-roughened resin film of the present invention can be obtained by laminating, to a metal sheet, such a surface- roughened resin film or a surface-roughened resin film obtained by embossing the surface of the resin film. Alternatively, it can be obtained by embossing a metal sheet coated with a resin film obtained by laminating a resin film whose surface has not been roughened to a metal sheet.

Such a metal sheet coated with a surface-roughened resin film is formed into a welded can, a drawn can or a drawn and ironed can, thereby obtaining the metal can having a surface coated with a surface-roughened resin film of the present invention. The surface roughness of the resin film is further increased by undergoing a drawing process or a drawing and ironing process. The metal can having a surface coated with a surface-roughened resin film of the present invention can be also obtained by processing a metal sheet coated with a resin film obtained by laminating a resin film whose surface has not been roughened to a metal sheet by drawing or drawing with ironing with the use of a punch whose surface has been roughened.

In the case of taking out the contents packed in such a metal can of the present invention having a surface coated with a surface-roughened resin film, since the surface of the resin film has been roughened, the contents do not firmly adhere to the can wall, whereby it can be easy to take out.

## Claims

1. A surface-roughened resin film comprising a polyester resin film whose surface roughness Ra (JIS B 0601) is 0.2 µm or greater.

2. The surface-roughened resin film according to claim 1 comprising a polyester resin film whose surface roughness Ra (JIS B 0601) is 0.5 µm or greater.

3. The surface-roughened resin film according to claim 1 or 2, formed by extruding a polyester resin obtained by incorporating therein 1% or more by weight of an inorganic particle with a particle size of 1 µm or greater.

4. The surface-roughened resin film according to claim 3, wherein the inorganic particle is one or more kinds of titanium dioxide, zinc oxide, calcium carbonate and silicone dioxide.

5. The surface-roughened resin film according to claim 1 or 2, formed by extruding a resin obtained by incorporating in the polyester resin film 5 to 30% by weight of a resin incompatible with the polyester resin film.

6. The surface-roughened resin film according to claim 5, wherein the resin incompatible with the polyester resin film is one or more kinds of a polyolefin resin and polymethylmethacrylate.

7. A surface-roughened resin film comprising a two-layer film consisting of a surface-roughened resin film according to any one of claims 1 to 6 as the upper layer film and a lower layer film which has been provided thereunder and is composed of a resin obtained by blending one or more kinds of polyester resins and a polyolefin component composed of at least one kind selected from the group consisting of a polyolefin resin and polyolefin elastomer.

8. The surface-roughened resin film according to claim 7, wherein a polyolefin resin or a resin composed of a polyolefin resin and polyolefin elastomer is used as the polyolefin component.

9. The surface-roughened resin film according to any one of claims 6 to 8, wherein the polyolefin resin is a resin composed of one or more kinds of polymer resins of 1-alkene having 2 to 8 carbon atoms.

10. The surface-roughened resin film according to claim 9, wherein the 1-alkene polymer resin is any of polyethylene, polypropylene, ethylene-propylene copolymer.

11. The surface-roughened resin film according to any one of claims 6, 8 and 9, wherein the polyolefin resin is a polyolefin resin obtained by polymerization with a metallocene catalyst.

12. The surface-roughened resin film according to claim 7, wherein at least a part of the polyolefin resin is a modified polyolefin resin obtained by modification with any of maleic anhydride, acrylic acid, acrylic ester and diglycidyl methacrylate.

13. The surface-roughened resin film according to claim 7 or 8, wherein the polyolefin elastomer is ethylene-propylene copolymer elastomer produced in plant with a melt flow rate (MFR: 230°C) of 0.4 to 30 g/10 minutes.

14. The surface-roughened resin film according to claim 7, wherein the blended resin constituting the lower layer film contains 1 to 30% by weight of the polyolefin component.

15. A metal sheet coated with a surface-roughened resin film, formed by laminating a surface-roughened resin film according to any one of claims 1 to 14 to a metal sheet.

16. A metal sheet coated with a surface-roughened resin film, formed by being coated with a polyester resin film having an uneven pattern formed on the surface by an embossing process.

17. The metal sheet coated with a surface-roughened resin film according to claim 16, wherein the surface roughness Ra (JIS B 0601) of the surface-roughened resin film is 0.2 µm or greater.

18. The metal sheet coated with a surface-roughened resin film according to claim 17, wherein the surface roughness Ra (JIS B 0601) of the surface-roughened resin film is 0.5 µm or greater.

19. A process for producing a metal sheet coated with a surface-roughened resin film **characterized by** laminating a surface-roughened resin film according to any one of claims 1 to 14 to a metal sheet.

20. A process for producing a metal sheet coated with a surface-roughened resin film **characterized by** laminating a polyester resin film having an uneven pattern formed on the surface by an embossing process to a metal sheet.

21. A process for producing a metal sheet coated with a surface-roughened resin film **characterized by** laminating a polyester resin film to a metal sheet and then embossing the surface of the polyester resin film.

22. A metal can having a surface coated with a surface-roughened resin film, formed by processing a metal sheet coated with a resin film, wherein the surface roughness Ra (JIS B 0601) of the resin film after being formed into a can is 0.5 µm or greater.

23. The metal can having a surface coated with a surface-roughened resin film according to claim 22, wherein the resin film is a polyester resin film.

24. A metal can having a surface coated with a surface-roughened resin film, formed by processing a metal sheet coated with a surface-roughened resin film according to any one of claims 15 to 18, wherein the surface roughness Ra (JIS B 0601) of the resin film after being formed into a can is 0.5 µm or greater.

25. The metal can having a surface coated with a surface-roughened resin film according to any one of claims 22 to 23, formed by processing a metal sheet coated with a resin film by drawing or by drawing with ironing with the use of a punch whose surface has been roughened.

26. A process for producing a metal can having a surface coated with a surface-roughened resin film **characterized by** processing a metal sheet coated with a polyester resin film and forming it into a can body by drawing or by drawing with ironing with the use of a punch whose surface has been roughened.
